# EUROPÄISCHE PATENTSCHRIFT

(11) **EP 1 535 865 B1**
(45) Veröffentlichungstag und Bekanntmachung des Hinweises auf die Patenterteilung: **13.06.2007**
(21) Anmeldenummer: 04090464.1
(22) Anmeldetag: 25.11.2004
(51) Int. Cl.: B65G 17/08

(54) **Kettenglied für eine Förderkette**
Chain link for a conveyor chain
Maillon de chaine pour chaine transporteuse

(30) Priorität: 25.11.2003 DE 10355872
(43) Veröffentlichungstag der Anmeldung: 01.06.2005
(73) Patentinhaber: Hauni Maschinenbau AG, 21033 Hamburg (DE)
(72) Erfinder: Müller, Thomas, 20259 Hamburg (DE); Stellmacher, Jan, 20357 Hamburg (DE)
(74) Vertreter: Wenzel & Kalkoff

(56) Entgegenhaltungen:
- DE-U1- 8 112 284
- GB-A- 2 225 762
- US-A- 4 893 709

## Beschreibung

Die Erfindung betrifft ein Kettenglied für eine Förderkette einer Maschine der tabakverarbeitenden Industrie, insbesondere eines Speichers für ein stabförmiges Tabakprodukt, mit Haltemitteln für einen Gelenkbolzen, mit einem Gelenkbolzenlager zur Verbindung des Kettenglieds mit benachbarten Kettengliedern, mit einer Tragfläche zum Tragen eines Tabakprodukts, die im wesentlichen parallel zu der durch die Gelenkachsen definierten Gelenkebene angeordnet ist, und mit einer Seitenwand des Kettenglieds, an der das Kettenglied seitlich zum Zusammenwirken mit einer Umlenkscheibe der Maschine eingerichtet ist.

Ein bezeichnetes Kettenglied ist z.B. aus US 4,893,709 bekannt. Es weist seitliche Nuten auf, die einen Halterand einer sich um eine vertikale Achse drehenden Umlenkscheibe passgenau aufnehmen, um zu erreichen, dass eine die Kettenglieder aufweisende, in horizontaler Lage laufende Kette gegen vertikale Bewegung an der Umlenkscheibe gesperrt wird.

Auch sind Kettenglieder für eine Förderkette aus EP 0 680 898 B1 oder DE 43 12 864 C2 bekannt. Beim Einsatz derartiger Kettenglieder für Förderketten beispielsweise in Zigarettenspeichern mit Umlenkscheiben, deren Drehachse gegen die Vertikale geneigt ist, ist eine Schwenkung des Kettenglieds um eine Längsschwenkachse im Kontaktbereich zwischen Kettenglied und Umlenkrad vorgesehen, um die Tragfläche der Kettenglieder beim Umlenken horizontal zu halten. Bei dieser Anordnung verursacht die Zugspannung der Förderkette im Bereich der Umlenkscheibe ein Schwenkmoment auf die Kettenglieder, das in der Praxis von einer lagesichernden Führung an der Außenseite der umgelenkten Kettenglieder aufgenommen wird. Die damit verbundenen Reibungsverluste wirken sich um so nachteiliger aus, je länger der mit Umlenkscheiben zusammenwirkende Teil der Förderkette ist. Um einerseits einen Ausgleich für das von dem geförderten Produkt verursachte Schwenkmoment zu schaffen, ist die Gelenkebene oberhalb der Mitte zwischen der Tragfläche und einer der Tragfläche entgegengesetzten Unterseite des Kettengliedes angeordnet (siehe EP 0 680 898 B1). Andererseits führt diese Anordnung infolge der

Kettenspannung jedoch zu einem Schwenkmoment auf das Kettenglied um eine zur Längsachse parallele Schwenkachse und daher zu einer Verschärfung der oben genannten Probleme.

Die Aufgabe der Erfindung besteht darin, ein Kettenglied für eine Förderkette in einer Maschine der tabakverarbeitenden Industrie bereitzustellen, bei dem die Nachteile aufgrund der durch die Kettenspannung hervorgerufenen Biege- bzw. Schwenkmomente reduziert sind und das insbesondere eine verlust- und verschleißarme sowie lagestabile Umlenkung der Förderkette ermöglicht.

Die Erfindung löst diese Aufgabe durch die Merkmale des Anspruches 1. Das Kettenglied weist ein mit der Umlenkscheibe zusammenwirkendes Führungselement auf, das so ausgebildet ist, daß einer Schwenkbewegung des Kettenglieds um die Längsschwenkachse eine von der Umlenkscheibe auf das Führungselement ausgeübte Reibungskraft entgegenwirkt. Eine entsprechende Schwenkung des Kettenglieds, und daher Reibungsverluste aufgrund der Reibung des Kettenglieds an einer lagesichernden Führung, können dadurch erheblich reduziert und gegebenenfalls verhindert werden. Die Reibungskraft meint dabei Haft- beziehungsweise Gleitreibung und ist daher abgegrenzt von Rollreibung. Das erfindungsgemäße Führungselement soll einem freien Abrollen des Kettengliedes an der Umlenkscheibe um eine Längsschwenkachse des Kettenglieds entgegenwirken.

Die Anordnung der Tragfläche im wesentlichen parallel zur Gelenkebene bezieht sich auf das Tabakprodukt aufnehmenden Teil der Tragfläche, d.h. abgesehen beispielsweise von Mitnehmern für das Tabakprodukt. Die im wesentlichen vertikale Drehachse der Umlenkscheibe bedeutet, daß die größte Richtungskomponente der Drehachse die Vertikalkomponente ist, und schließt daher gegen die Vertikale geneigte Drehachsen mit ein.

Der Erfolg der Erfindung kann durch verschiedene Formungen des Führungselements erzielt werden. Besonders einfach und damit bevorzugt ist eine sich im wesentlichen parallel zur Längsachse erstreckende Nut in der Seitenwand zum Eingreifen der Umlenkscheibe. Zweckmäßigerweise ist dabei die lichte Weite der Nut im Querschnitt geringer als die Axialausdehnung, d.h. die Materialstärke der Umlenkscheibe. Das Führungselement kann auch durch eine Erhobung gebildet sein, wie dies noch erläutert wird.

Vorzugsweise ist die Tiefe der Nut im Querschnitt größer als der Eingriff der Umlenkscheibe in die Nut. Dies erlaubt einen gezielten Materialverschleiß durch Abtragen der äußeren Kanten der Nut, wobei die Umlenkscheibe tiefer in die Nut eindringt, so daß der Reibungseffekt erhalten bleibt. Der Materialbereich unter den äußeren Kanten der Nut bildet daher eine gezielte Verschleißreserve.

Vorzugsweise weist die Nut eine sich zum Nutinneren, d.h. zum Nutgrund hin verjüngende Form auf. Bei einer sich zum Außenrand hin verjüngenden Querschnittsform der Umlenkscheibe wird hierdurch eine größere Reibungsfläche und daher eine verbesserte Reibungswirkung geschaffen. Vorzugsweise weist die Nut daher zum Nutinneren hin geneigte Seitenwände auf, die jeweils mit der Symmetrieebene einen Winkel vorzugsweise im Bereich von 10° bis 60°, weiter vorzugsweise 20° bis 50°, weiter vorzugsweise 35° bis 45° einschließen.

Besonders vielversprechend ist die Anwendung der Erfindung bei Maschinen mit Umlenkscheiben, deren Drehachse gegen die Vertikale geneigt ist, da gerade die Neigung der Umlenkscheiben Schwenkmomente an den Kettengliedern um eine Längsschwenkachse und die damit verbundenen Probleme verursacht. Zweckmäßigerweise erlaubt daher die Form des Führungselements eine Schwenkung um die Längsschwenkachse im Kontaktbereich zwischen Kettenglied und Umlenkrad. Der Schwenkbereich um die Längsschwenkachse soll zweckmäßigerweise eine horizontale Ausrichtung der Tragfläche des Kettenglieds während des Umlenkens gestatten.

Vorzugsweise ist das Führungselement im wesentlichen in der Gelenkebene angeordnet, um auf das Kettenglied infolge der Kettenspannung wirkende Schwenkmomente um eine Längsschwenkachse zu reduzieren.

Eine vorteilhafte Ausgestaltung des Kettenglieds mit zur Horizontalumlenkung seitlichern Schwenk-Führungselement besteht darin, daß das Kettenglied zur Vertikalumlenkung der Kette an der Tragflächenseite zum Zusammenwirken mit einer sich um eine im wesentlichen horizontale Achse drehenden kreisrunden Umlenkrolle der Maschine eingerichtet ist, wobei der Kontakt des Kettenglieds mit der Umlenkrolle im Bereich einer der Gelenkachsen, d.h. im Bereich der Achse der Haltemittel für den Gelenkbolzen oder vorzugsweise des Gelenkbolzenlagers liegt. Durch Verlagerung der Kontaktpunkte des Kettenglieds in den Bereich einer der Gelenkachsen wird ein auf die Kettenglieder wirkendes Biegemoment verhindert oder jedenfalls minimiert. Die genannte Ausgestaltung weist in bevorzugter Ausführungsform eine parallel zur Längsachse verlaufende Ausnehmung für die Umlenkrolle auf, die in der die Tragfläche bildenden Wand vorgesehen ist. Die Ausnehmung kann ebenfalls zur seitlichen Führung der Umlenkrolle dienen; dies kann insbesondere dadurch erreicht werden, daß die Breite der Ausnehmung im wesentlichen der Axialausdehnung der Umlenkrolle entspricht. Weiterhin erlaubt diese Ausführungsform, bekannte Kettenglieder durch Anfertigung einer Ausnehmung erfindungsgemäß zu nutzen. Eine solche Ausnehmung ist jedoch nicht zwingend. Bei einer anderen Ausführungsform kann eine Erhebung an der Tragfläche in der Nähe der Gelenkachsen angeordnet sein, die mit der Umlenkrolle in Kontakt steht. Eine solche Erhebung kann beispielsweise von einem Mitnehmer für das Tabakprodukt gebildet werden, wenn dieser anstelle seiner herkömmlichen Anordnung etwa zwischen den Gelenkachsen in deren Nähe angeordnet ist. Es kann in diesem Fall auch eine in Längsachse verlaufende Ausnehmung in der Erhebungen vorgesehen sein, in die die Umlenkrolle eingreift, um eine seitliche Führung zu bewirken. Die Tiefe der Ausnehmung ist dann zweckmäßigerweise geringer als die Höhe der Erhebung über der Tragfläche.

Nach einem vorteilhaften Merkmal ist die Gelenkebene etwa in der Mitte zwischen der Tragfläche und einer der Tragfläche entgegengesetzten Unterseite des Kettengliedes angeordnet. Hierdurch kann das Schwenkmoment auf die Kettenglieder um eine Längsschwenkachse reduziert werden. Dieser Aspekt der Erfindung ist gegebenenfalls eigenständig, d.h. in einer nur auf den Oberbegriff des Anspruchs 1 rückbezogenen Form, beanspruchbar.

Weitere vorteilhafte Merkmale und Ausführungsformen der Erfindung gehen aus den Unteransprüchen und der folgenden Beschreibung der Erfindung unter Bezugnahme auf die beigefügten Zeichnungen hervor. Dabei zeigen:
- Fig. 1:: eine erste perspektivische Ansicht eines Kettengliedes;
- Fig. 2:: eine zweite perspektivische Ansicht des Kettengliedes;
- Fig. 3:: eine Querschnittsansicht des Kettengliedes bei einem Schnitt durch die Symmetrieebene;
- Fig. 4:: eine Draufsicht des Kettengliedes bei einem Querschnitt durch die Gelenkebene;
- Fig. 5:: eine Querschnittsansicht des Kettengliedes bei einem Schnitt durch die in Fig. 3 gezeigte Querebene;
- Fig. 6:: die perspektivische Ansicht gemäß Fig. 1, jedoch mit abgeschnittenem Tragflächen- und Führungsflügel;
- Fig. 7:: die perspektivische Ansicht gemäß Fig. 2, jedoch mit abgeschnittenem Tragflächen- und Führungsflügel;
- Fig. 8A:: ein schematischer Ausschnitt aus Fig. 5 im Bereich des Führungselements gemäß einer ersten Ausführungsform;
- Fig. 8B,: C: ein schematischer Ausschnitt aus Fig. 5 im Bereich des Führungselements gemäß einer zweiten Ausführungsform;
- Fig. 8D:: ein schematischer Ausschnitt aus Fig. 5 im Bereich des Führungselements gemäß einer dritten Ausführungsform;
- Fig. 8E:: ein schematischer Ausschnitt aus Fig. 5 im Bereich des Führungselements gemäß einer vierten Ausführungsform;
- Fig. 8F:: ein schematischer Ausschnitt aus Fig. 5 im Bereich des Führungselements gemäß einer fünften Ausführungsform; und
- Fig. 9:: eine zu Fig. 3 analoge Querschnittsansicht einer Förderkette im Bereich einer Umlenkrolle einer Maschine.

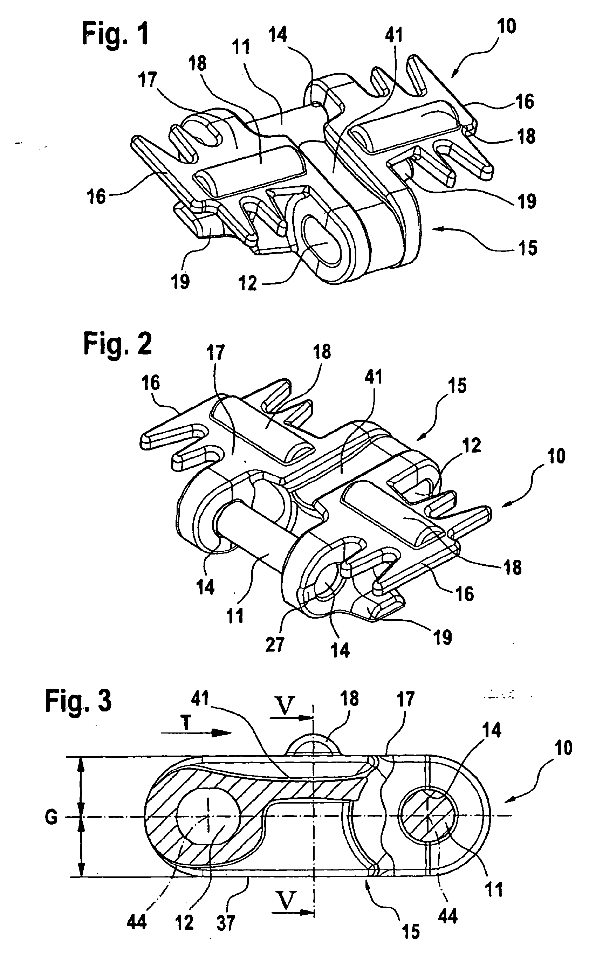

Ein Kettenglied 10 umfaßt Aufnahmen 14 zum Halten eines Gelenkbolzens 11 und ein Gelenkbolzenlager 12. Mittels des Gelenkbolzens 11 können Kettenglieder 10 zu einer Förderkette 13 für eine Maschine der tabakverarbeitenden Industrie verbunden werden. Durch die Gelenkachsen, d.h. die Mittelachsen der Gelenkbolzenaufnahme 14 und des Gelenkbolzenlagers 12, wird die Gelenkebene G definiert (siehe Fig. 3). Die Transportrichtung T verläuft vorzugsweise in Pfeilrichtung gemäß Fig. 3, 4 und 9; sie kann jedoch auch entgegengesetzt zu dieser Pfeilrichtung verlaufen.

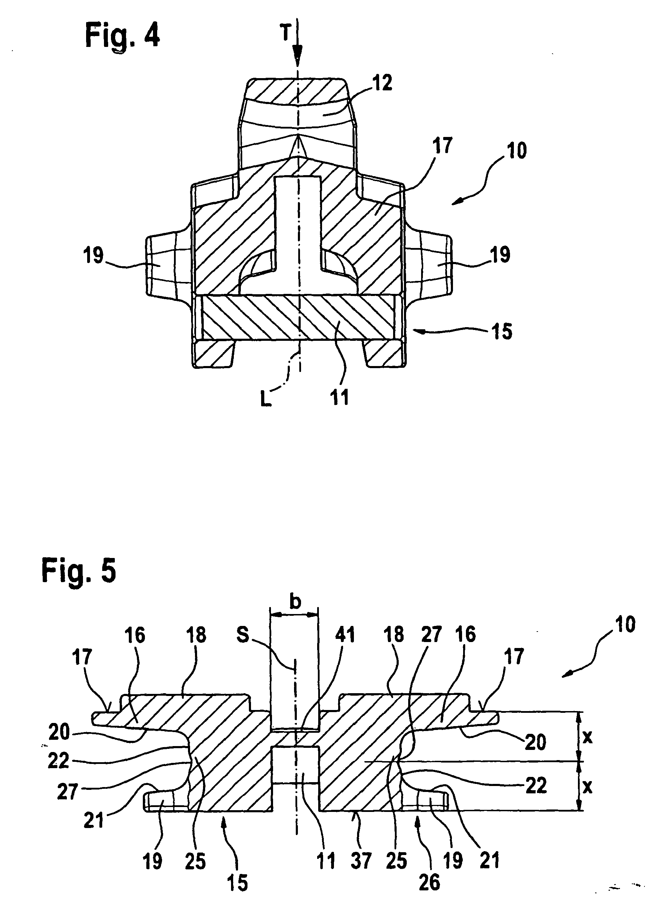

An dem Grundkörper 15 des Kettenglieds 10 sind seitlich zwei plattenförmige Tragelemente 16 angesetzt. Der Begriff "seitlich" ist bezogen auf die Längsachse L des Kettenglieds 10 (siehe Fig. 4), die sich als Schnittgerade der Gelenkebene G und der Symmetrieebene S ergibt. Eine parallel zur Gelenkebene orientierte Tragfläche 17 des Kettenglieds 10, die aus fluchtenden Oberflächen der Tragelemente 16 und des Grundkörpers 15 besteht, dient zum Tragen eines stabförmigen Tabakprodukts, insbesondere Zigaretten, deren Längsachse parallel zu den Gelenkachsen orientiert sind. Auf der Tragfläche 17 des Kettenglieds 10 sind parallel zu den Gelenkachsen orientierte längliche Mitnehmer 18 für das zu fördernde Tabakprodukt vorgesehen.

An der den Tragelementen 16 entgegengesetzten Unterseite 37 des Kettenglieds 10 sind seitlich Führungsflügel 19 angesetzt. In einem Querschnitt senkrecht zur Längsachse L, wie aus Fig. 5 ersichtlich, ergibt sich daher an jeder Seite ein U-förmiges Profil 26 aus dem Tragelement 16 mit Unterseite 20, dem Führungsflügel 19 mit Oberseite 21 und einem eine Seitenwand 22 bildenden Wandteil 25 des Grundkörpers 15. In das U-förmige Führungsprofil 26 kann eine Umlenkscheibe 23 eingreifen, um das Kettenglied 10 beziehungsweise eine aus Kettengliedern 10 gebildete Förderkette 13 im wesentlichen horizontal umzulenken, wobei die nicht gezeigte Drehachse der Umlenkscheibe 23 im wesentlichen senkrecht zur Gelenkebene G orientiert ist. Dabei wirkt der äußere Rand 24 der Umlenkscheibe 23 mit der Seitenwand 22 des Wandteils 25, d.h. dem Grund des U-förmigen Führungsprofils 26 zusammen. Die Kettenglieder 10 sind dementsprechend zur Schwenkung um eine im wesentlichen senkrecht zur Gelenkebene orientierte Schwenkachse eingerichtet. Insbesondere ist das Gelenkbolzenlager 12 nach außen aufgeweitet, wie aus Fig. 4 ersichtlich. Die Umlenkscheibe 23 kann beispielsweise ein Speichenrad sein.

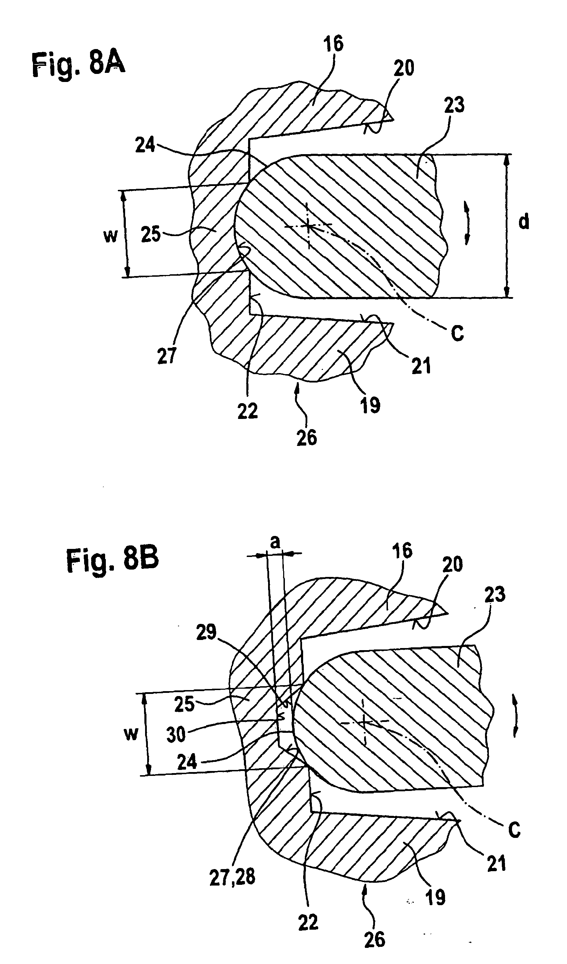

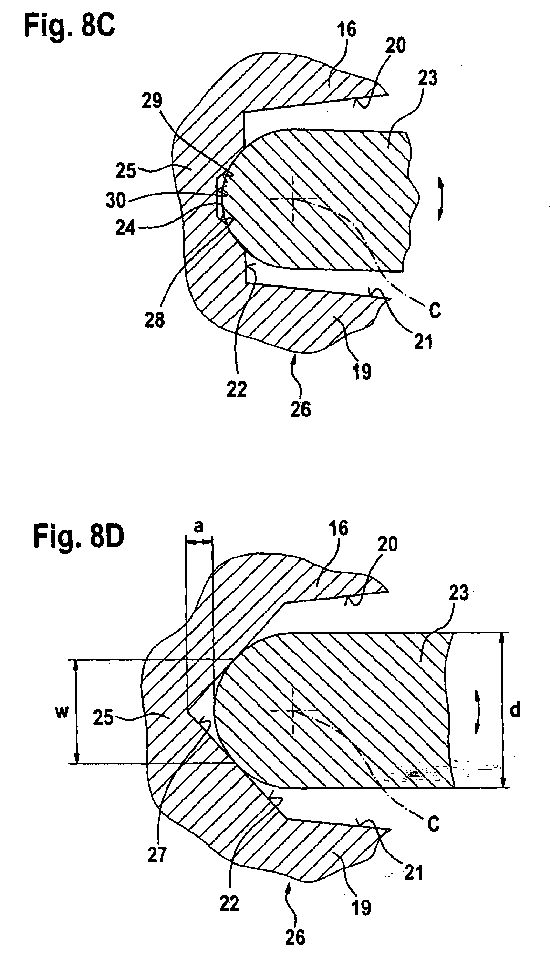

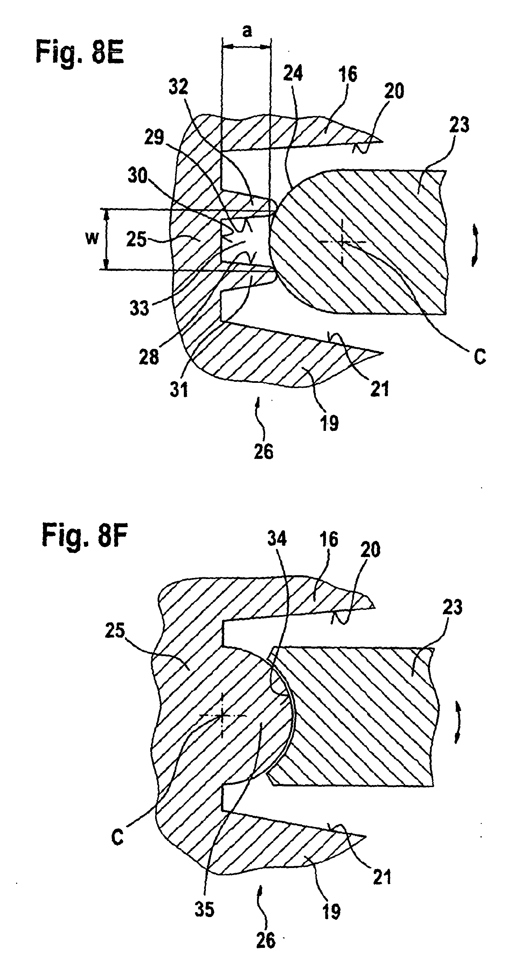

Weiterhin ist die Umlenkscheibe 23 an ihrem äußeren Rand 24 gerundet, wie aus Fig. 8 ersichtlich, damit sie eine Schwenkung um die Längsschwenkachse C des Kettenglieds 10 vollziehen kann, wie in Fig. 8 jeweils mit einem Doppelpfeil angedeutet. Zu diesem Zweck weist das U-formige Führungsprofil 26 eine ausreichende Weite auf (d.h. einen ausreichenden Abstand der Unterseite 20 des Tragelements 16 von der Oberseite 21 des Führungsflügels 19), die insbesondere größer ist als die Axialausdehnung der Umlenkscheibe 23 im Bereich des Führungsprofils 26.

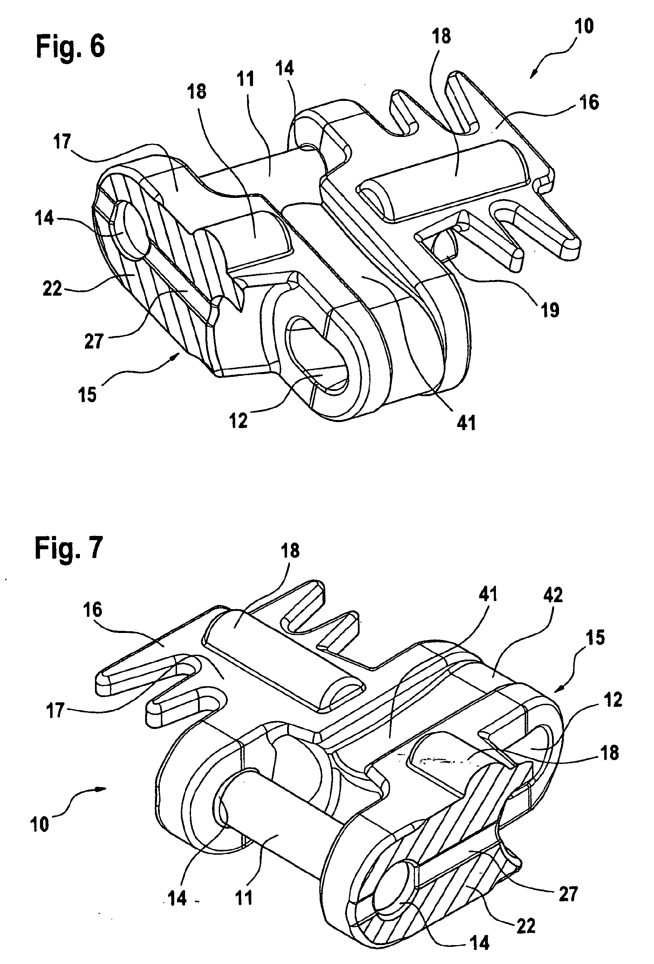

In der Seitenwand 22 des Wandteils 25 ist eine Nut 27 zum Eingreifen der Umlenkscheibe 23 vorgesehen. Die Nut 27 erstreckt sich im vorliegenden Beispiel über die gesamte Länge der Seitenwand 22 des Grundkörpers 15 (siehe Fig. 6, 7), was einfach zu fertigen ist. Sie kann jedoch auch nur in einem mit der Umlenkscheibe 23 zusammenwirkenden Längenbereich vorgesehen sein.

Im Beispiel der Fig. 8A ist die Nut 27 kreisbogenförmig mit einer an den Radius der äußeren Rundung 24 der Umlenkscheibe 23 angepaßten Form. Die lichte Weite w der Nut 27 ist dabei geringer als die Axialausdehnung d der Umlenkscheibe 23 im Bereich des Führungsprofils 26. Es ergibt sich eine Reibungsfläche zwischen der Umlenkscheibe 23 und der Nut 27, wobei die dadurch verursachte Reibung einer Schwenkung des Kettenglieds 10 um die Längsschwenkachse C entgegenwirkt und diese gegebenenfalls verhindern kann. Hierdurch unterscheidet sich die Nut 27, bei der die geschilderte Reibwirkung in der Betriebsposition des Kettenglieds 10, d.h. bei horizontaler Tragfläche 17 ausgeübt wird, von dem U-förmigen Führungsprofil 26. Bei einer Seitenwand 22 ohne Nut 27 würde eine Schwenkbewegung der Umlenkscheibe 23 um eine Längsschwenkachse des Kettenglieds 10 zu einem Abrollen der Umlenkscheibe 23 auf der Seitenwand 22 führen, so daß in der Betriebsposition des Kettenglieds 10, d.h. bei horizontaler Tragfläche 17 im wesentlichen keine vorteilhafte Reibungswirkung erzielbar wäre.

Eine bevorzugte Ausführungsform der Nut 27 ist in Fig. 8B gezeigt. Die sich nach innen verjüngende Nut 27 weist zwei Seitenwände 28, 29 auf. Weiterhin ist ein ebener Nutboden 30 vorgesehen, dies ist aber nicht zwingend erforderlich. Besonders vorteilhaft ist, daß die Tiefe der Nut 27 im Querschnitt größer ist als der Eingriff der Umlenkscheibe 23 in die Nut, so daß sich ein freier Abstand a der Spitze der Umlenkscheibe 23 von dem Nutgrund, d.h. dem tiefsten Punkt der Nut 27 ergibt. Die Nut 27 weist daher im Querschnitt mindestens zwei verschiedene mit der Umlenkscheibe 23 zusammenwirkende Bereiche auf. Bei einem verschleißbedingten Abtragen dieser Bereiche, d.h. der Außenkanten der Nut 27 bzw. allgemeiner von Wandmaterial im Bereich des Führungselements 27, erlaubt dieses Merkmal ein entsprechendes Eindringen der Umlenkscheibe 23 in die Nut 27 (siehe Fig. 8C), wobei die Reibungsfläche zwischen Umlenkscheibe 23 und Nut 27 erhalten bleibt. Ohne den freien Abstand a könnte es zu einer seitlichen Ausweitung der Nut 27 und damit zu einer Verminderung der Reibungswirkung kommen.

Das Ausführungsbeispiel gemäß Fig. 8D verdeutlicht, daß die Seitenwand 22 des Grundkörpers 15 keine ebene, im wesentlichen parallel zur Symmetrieebene S orientierte Fläche sein muß. Die eigentliche Nut 27 erstreckt sich von den Kontaktpunkten der Umlenkscheibe 23 mit dem Kettenglied 10 ins Nutinnere. Auch im Beispiel der Fig. 8D ist daher die lichte Weite w der Nut 27 geringer als die Axialausdehnung d der Umlenkscheibe 23.

Im Ausführungsbeispiel gemäß Fig. 8E sind anstelle einer Nut in der Seitenwand 22 zwei Stege 31, 32 an der Seitenwand 22 vorgesehen, zwischen denen ein nutähnlicher Freiraum 33 gebildet ist. Die Stege 31, 32 verlaufen zweckmäßigerweise im wesentlichen parallel zur Längsachse des Kettenglieds 10. Die Stege 31, 32 können durch Verschleiß abgetragen werden und bilden daher eine Verschleißreserve.

Das Ausführungsbeispiel der Fig. 8F verdeutlicht, daß anstelle einer Nut in der Seitenwand 22 des Kettengliedes 10 auch umgekehrt eine Nut 34 im äußeren Rand der Umlenkscheibe 23 vorgesehen sein kann. Das reibungserzeugende Führungselement des Kettengliedes 10 ist in diesem Beispiel als Erhebung 35 ausgebildet, die an der Seitenwand 22 des Kettenglieds 10 angeordnet ist. Die Erhebung 35 ist vorzugsweise ein im wesentlichen parallel zur Längsachse des Kettenglieds 10 orientierter Steg. Die Form der Erhebung 35 im Querschnitt ist vorzugsweise an die Form der Nut 34 angepaßt, wie in Fig. 8F gezeigt.

Wie aus Fig. 5 ersichtlich ist das Führungselement 27 vorzugsweise symmetrisch um die Gelenkebene G angeordnet. Die Gelenkebene G ist vorzugsweise in der Mittelebene zwischen der Tragfläche 17 und der Unterseite 37 des Grundkörpers 15 des Kettenglieds 10 angeordnet. Mittels dieser Anordnung werden Schwenkmomente um eine zur Längsschwenkachse des Kettenglieds 10 infolge der Kettenspannung minimiert.

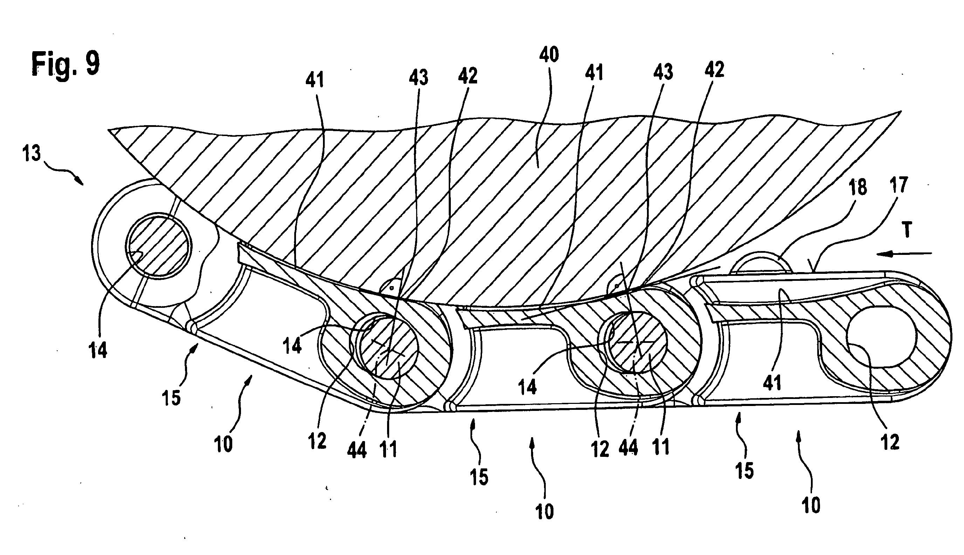

Das Kettenglied 10 ist vorzugsweise an der Seite der Tragfläche 17 zum Zusammenwirken mit einer sich um eine im wesentlichen horizontale Achse drehenden kreisrunden Umlenkrolle 40 der Maschine zum entsprechenden Umlenken der Förderkette eingerichtet (siehe Fig. 9). An der Tragflächenseite des Kettenglieds 10 ist zu diesem Zweck eine Ausnehmung 41 vorgesehen, in die die Umlenkrolle 40 eingreift. Die Ausnehmung 41 ist im vorliegenden Beispiel kreisbogenförmig mit einem Radius, der größer ist als der Radius der Umlenkrolle 40. Aufgrund der Form der Ausnehmung 41 weist jedes Kettenglied nur einen mit der Umlenkrolle 40 zusammenwirkenden Bereich 42 auf. Die Ausnehmung 41 ist vorzugsweise länglich und verläuft vorzugsweise im wesentlichen parallel zur Längsachse des Kettenglieds 10. Sie ist vorzugsweise in der Symmetrieebene S des Kettengliedes 10 angeordnet (siehe Fig. 5), um das Auftreten von störenden Schwenkmomenten infolge der Kettenspannung zu vermeiden. Die Breite b der Ausnehmung 41 korrespondiert mit der Breite der Umlenkrolle 40 an ihrem Umfang, beispielsweise eines sich radial auswärts erstreckenden Absatzes der Umlenkrolle 40, so daß die Ausnehmung 41 eine seitliche Führung für die Umlenkrolle 40 darstellt. Zweckmäßigerweise sind die Mitnehmer 18 auf der Tragfläche 17 im Bereich der Umlenkrolle 40 unterbrochen.

Der Kontaktbereich 42 zwischen dem Kettenglied 10 und der Umlenkrolle 40 liegt vorzugsweise im Bereich einer der Gelenkachsen, d.h. im Bereich der Gelenkbolzenhalterungsachse oder der Gelenkbolzenlagerachse, um nachteilige Biegemomente auf das Kettenglied 10 aufgrund der Kettenspannung zu vermeiden. Dies bedeutet, daß in einem Querschnitt wie in Fig. 9 gezeigt der Abstand des Kontaktbereichs 42 von dem Schnittpunkt 43 des Lots der Gelenkachse 44 auf die Oberfläche der Umlenkrolle 40 klein ist gegen den Abstand zweier benachbarter Schnittpunkte 43. "Klein" bedeutet höchstens 20 %, vorzugsweise höchstens 10 %. Ohne die Ausnehmung 41 würde das Kettenglied 10 etwa in der Mitte zwischen zwei benachbarten Gelenkachsen 44 bzw. benachbarten Schnittpunkten 43 mit der Umlenkrolle 40 in Kontakt stehen, was ein erhebliches Biegemoment aufgrund der Kettenspannung verursachen würde. Es ist auch möglich, daß ein Kettenglied 10 Kontaktbereiche im Bereich beider Gelenkachsen 44 aufweist.

## Patentansprüche

1. Kettenglied (10) für eine Förderkette (13) einer Maschine der tabakverarbeitenden Industrie, insbesondere eines Speichers für ein stabförmiges Tabakprodukt, mit Haltemitteln (14) für einen Gelenkbolzen (11), mit einem Gelenkbolzenlager (12) zur Verbindung des Kettenglieds (10) mit benachbarten Kettengliedern, mit einer Tragfläche (17) zum Tragen eines Tabakprodukts, die im Wesentlichen parallel zu der durch die Gelenkachsen (44) definierten Gelenkebene (G) angeordnet ist, und mit einer Seitenwand (22) des Kettenglieds (10), an der das Kettenglied (10) seitlich zum Zusammenwirken mit einer Umlenkscheibe (23) der Maschine eingerichtet ist, **dadurch gekennzeichnet, dass** das Kettenglied (10) beim Zusammenwirken mit einer sich um eine vertikale Achse oder um eine gegen die Vertikale geneigte Achse drehenden Umlenkscheibe (23) zur Schwenkung um eine zur Längsachse (L) des Kettenglieds (10) parallele Längsschwenkachse (C) derart eingerichtet ist, dass das Kettenglied (10) ein mit der Umlenkscheibe (23) schwenkbar zusammenwirkendes reibungserzeugendes Schwenk-Führungselement (27;31 - 33;35) zum Schwenkeingriff mit der Umlenkscheibe (23) aufweist, das an der Seitenwand (22) durch Nut (27; 30, 33) und/oder Erhebung (35; 31, 32) so ausgebildet ist, dass eine von der Umlenkscheibe (23) auf das Führungselement (27; 31-33; 35) ausgeübte Reibungskraft einer Schwenkbewegung des Kettenglieds (10) um die Längsschwenkachse (C) entgegenwirkt.

2. Kettenglied nach Anspruch 1, **dadurch gekennzeichnet, dass** das Führungselement als Nut (27) in der Seitenwand (22) ausgebildet ist und die lichte Weite der Nut (27) im Querschnitt geringer ist als die Axialausdehnung der Umlenkscheibe (23).

3. Kettenglied nach Anspruch 1 oder 2, **dadurch gekennzeichnet, dass** die Tiefe der Nut (27) im Querschnitt größer ist als der Eingriff der Umlenkscheibe (23) in die Nut (27).

4. Kettenglied nach einem der Ansprüche 1 bis 3, **dadurch gekennzeichnet, dass** die Nut (27) eine sich zum Nutinneren hin verjüngende Form aufweist.

5. Kettenglied nach einem der Ansprüche 1 bis 4, **dadurch gekennzeichnet, dass** die Nut (27) zum Nutinneren hin geneigte Seitenwände (28, 29) aufweist.

6. Kettenglied nach Anspruch 5, **dadurch gekennzeichnet, dass** die Seitenwände (28, 29) jeweils mit der Symmetrieebene (S) einen Winkel vorzugsweise im Bereich von 10° bis 60°, weiter vorzugsweise 20° bis 50°, weiter vorzugsweise 35° bis 45° einschließen.

7. Kettenglied nach einem der Ansprüche 1 bis 6, **dadurch gekennzeichnet, dass** das Führungselement (27) im Wesentlichen in der Gelenkebene (G) angeordnet ist.

8. Kettenglied nach einem der Ansprüche 1 bis 7, **dadurch gekennzeichnet, dass** es zum Zusammenwirken mit einer Umlenkscheibe (23) eingerichtet ist, deren Drehachse gegen die Vertikale geneigt ist, wobei der Schwenkbereich des Kettenglieds (10) um die Längsschwenkachse (C) eine horizontale Ausrichtung der Tragfläche (17) während des Zusammenwirkens mit der Umlenkscheibe (23) gestattet.

9. Kettenglied nach einem der Ansprüche 1 bis 8, **dadurch gekennzeichnet, dass** das Kettenglied (10) an der Tragflächenseite zum Zusammenwirken mit einer sich um eine im Wesentlichen horizontale Achse drehenden kreisrunden Umlenkrolle (40) der Maschine eingerichtet ist, wobei der Kontakt des Kettenglieds (10) mit der Umlenkrolle (40) im Bereich wenigstens einer der Gelenkachsen (44) liegt.

10. Kettenglied nach Anspruch 9, **dadurch gekennzeichnet, dass** in der die Tragfläche (17) bildenden Wand eine parallel zur Längsachse (L) verlaufende Ausnehmung (41) zum Eingreifen der Umlenkrolle (40) vorgesehen ist.

11. Kettenglied nach Anspruch 10, **dadurch gekennzeichnet, dass** die Ausnehmung (41) in einem zu den Gelenkachsen (44) senkrechten Querschnitt kreisbogenförmig ist.

12. Kettenglied nach Anspruch 11, **dadurch gekennzeichnet, dass** der Radius des Kreisbogens mindestens so groß ist wie der Außenradius der Umlenkrolle (40).

13. Kettenglied nach einem der Ansprüche 10 bis 12, **dadurch gekennzeichnet, dass** die Breite der Ausnehmung (41) mit der Axialausdehnung der Umlenkrolle (40) an ihrem Umfang korrespondiert.

14. Kettenglied nach einem der Ansprüche 1 bis 13, **dadurch gekennzeichnet, dass** die Gelenkebene (G) in der Mittelebene zwischen der Tragfläche (17) und einer der Tragfläche entgegengesetzten Unterseite (37) des Kettengliedes (10) angeordnet ist.

15. Maschine der tabakverarbeitenden Industrie, insbesondere ein Speicher für ein stabförmiges Tabakprodukt, mit einer Förderkette, die aus Kettengliedern (10) nach einem der Ansprüche 1 bis 14 besteht.

## Claims

1. Chain link (10) for a conveying chain (13) of a machine of the tobacco-processing industry, in particular a storage device for a rod-shaped tobacco product, with holding means (14) for a hinge pin (11), with a hinge pin bearing (12) for connecting the chain link (10) to adjacent chain links, with a carrying surface (17) for carrying a tobacco product, which carrying surface is arranged substantially parallel to the hinge plane (G) defined by the hinge axes (44), and with a side wall (22) of the chain link (10) at which the chain link (10) is designed laterally for cooperation with a deflection plate (23) of the machine, **characterized in that** the chain link (10), when cooperating with a deflection plate (23) rotating about a vertical axis or an axis inclined to the vertical, is designed for pivoting about a longitudinal pivot axis (C) parallel to the longitudinal axis (L) of the chain link (10) in such a way that the chain link (10) has a friction-generating pivotal guide element (27; 31-33; 35) pivotally cooperating with the deflection plate (23) for pivotal engagement with the deflection plate (23), which pivotal guide element (27; 31-33; 35) is designed at the side wall (22) by a groove (27; 30, 33) and/or a projection (35; 31, 32) in such a way that a pivot movement of the chain link (10) about the longitudinal pivot axis (C) is counteracted by a frictional force exerted by the deflection plate (23) on the guide element (27; 31-33; 35).

2. Chain link according to claim 1, **characterized in that** the guide element is formed as a groove (27) in the side wall (22) and the inside width of the groove (27) in cross-section is smaller than the axial extent of the deflection plate (23).

3. Chain link according to claim 1 or 2, **characterized in that** the depth of the groove (27) in cross-section is larger than the engagement of the deflection plate (23) into the groove (27).

4. Chain link according to any one of claims I to 3, **characterized in that** the groove (27) has a shape tapering towards the interior of the groove.

5. Chain link according to any one of claims I to 4, **characterized in that** the groove (27) has side walls (28, 29) which are inclined towards the interior of the groove.

6. Chain link according to claim 5, **characterized in that** the side walls (28, 29) form with the plane of symmetry (S) an angle preferably within the range of 10° to 60°, further preferably 20° to 50°, further preferably 35° to 45°.

7. Chain link according to any one of claims 1 to 6, **characterized in that** the guide element (27) is arranged substantially in the hinge plane (G).

8. Chain link according to any one of claims 1 to 7, **characterized in that** it is designed to cooperate with a deflection plate (23) whose axis of rotation is inclined to the vertical, wherein the pivot range of the chain link (10) about the longitudinal pivot axis (C) permits a horizontal orientation of the carrying surface (17) during cooperation with the deflection plate (23).

9. Chain link according to any one of claims 1 to 8, **characterized in that** on the side of the carrying surface the chain link (10) is designed to cooperate with a round deflection roller (40) of the machine, which rotates about a substantially horizontal axis, wherein contact of the chain link (10) with the deflection roller (40) lies in the region of at least one of the hinge axes (44).

10. Chain link according to claim 9, **characterized in that** in the wall forming the carrying surface (17) is provided a recess (41) running parallel to the longitudinal axis (L) for engagement of the deflection roller (40).

11. Chain link according to claim 10, **characterized in that** the recess (41) is arcuate in a cross-section perpendicular to the hinge axes (44).

12. Chain link according to claim 11, **characterized in that** the radius of the arc is at least as large as the outer radius of the deflection roller (40).

13. Chain link according to any one of claims 10 to 12, **characterized in that** the width of the recess (41) corresponds to the axial extent of the deflection roller (40) at its circumference.

14. Chain link according to any one of claims I to 13, **characterized in that** the hinge plane (G) is arranged in the centre plane between the carrying surface (17) and a lower side (37) of the chain link (10) opposite the carrying surface.

15. Machine of the tobacco processing industry, in particular a storage device for a rod-shaped tobacco product, with a conveying chain which consists of chain links (10) according to any one of claims 1 to 14.

## Revendications

1. Maillon de chaîne (10) pour une chaîne transporteuse (13) d'une machine de l'industrie du tabac, en particulier d'un accumulateur pour un produit de tabac en forme de tige, comportant des moyens de retenue (14) d'un axe d'articulation (11), un palier (12) d'axe d'articulation pour relier le maillon de chaîne (10) à des maillons de chaîne adjacents, une surface d'appui (17) pour porter un produit de tabac, disposée dans une direction sensiblement parallèle au plan d'articulation (G) défini par les axes d'articulation (44), et une paroi latérale (22) du maillon de chaîne (10) sur laquelle le maillon de chaîne (10) est monté latéralement pour coopérer avec une poulie de renvoi (23) de la machine, **caractérisé en ce que** le maillon de chaîne (10), lorsqu'il coopère avec une poulie de renvoi (23) en rotation autour d'un axe vertical ou d'un axe incliné par rapport à la verticale pour pivotement autour d'un axe de pivotement longitudinal (C) parallèle à l'axe longitudinal (L) du maillon de chaîne (10), est aménagé de façon telle que le maillon de chaîne (10) présente un élément de guidage en pivotement, générateur de frottement, coopérant à pivotement avec la poulie de renvoi (23) en vue de l'engrènement à pivotement avec la poulie de renvoi (23), élément de guidage formé sur la paroi latérale (22) par une rainure (27 ; 30, 33) et/ou un bossage (35 ; 31 ; 32) de telle façon qu'une force de frottement exercée par la poulie de renvoi (23) sur l'élément de guidage (27; 31-33 ; 35) s'oppose à un mouvement de pivotement du maillon de chaîne (10) autour de l'axe de pivotement longitudinal (C).

2. Maillon de chaîne selon la revendication 1, **caractérisé en ce que** l'élément de guidage est réalisé sous forme de rainure (27) dans la paroi latérale (22) et **en ce que** la largeur intérieure de la rainure (27) est, en section transversale, inférieure à l'étendue axiale de la poulie de renvoi (23).

3. Maillon de chaîne selon la revendication 1 ou 2, **caractérisé en ce que** la profondeur de la rainure (27) est, en section transversale, supérieure à l'engrènement de la poulie de renvoi (23) dans la rainure (27).

4. Maillon de chaîne selon l'une des revendications 1 à 3, **caractérisé en ce que** la rainure (27) présente une forme s'effilant vers l'intérieur de la rainure.

5. Maillon de chaîne selon l'une des revendications 1 à 4, **caractérisé en ce que** la rainure (27) présente des parois latérales (28, 29) inclinées vers l'intérieur de la rainure.

6. Maillon de chaîne selon la revendication 5, **caractérisé en ce que** les parois latérales (28, 29) forment respectivement avec le plan de symétrie (S) un angle de préférence compris entre 10° et 60°, plus préférentiellement entre 20° et 50° et encore plus préférentiellement entre 35° et 45°.

7. Maillon de chaîne selon l'une des revendications 1 à 6, **caractérisé en ce que** l'élément de guidage (27) est disposé sensiblement dans le plan d'articulation (G).

8. Maillon de chaîne selon l'une des revendications 1 à 7, **caractérisé en ce qu'**il est aménagé pour coopérer avec une poulie de renvoi (23) dont l'axe de rotation est incliné par rapport à la verticale, la plage de pivotement du maillon de chaîne (10) autour de l'axe de pivotement longitudinal (C) permettant un alignement horizontal de la surface d'appui (17) lors de la coopération avec la poulie de renvoi (23).

9. Maillon de chaîne selon l'une des revendications 1 à 8, **caractérisé en ce que** le maillon de chaîne (10) est aménagé sur le côté de la surface d'appui pour coopérer avec un rouleau déflecteur (40) de la machine, circulaire et en rotation autour d'un axe sensiblement horizontal, le point de contact du maillon de chaîne (10) avec le rouleau déflecteur (40) étant situé dans la zone d'au moins l'un des axes d'articulation (44).

10. Maillon de chaîne selon la revendication 9, **caractérisé en ce que**, dans la paroi formant la surface d'appui (17), est prévu un évidement (41) s'étendant parallèlement à l'axe longitudinal (L) pour l'engrènement du rouleau déflecteur (40).

11. Maillon de chaîne selon la revendication 10, **caractérisé en ce que** l'évidement (41), dans une section transversale perpendiculaire aux axes d'articulation (44), a la forme d'un arc de cercle.

12. Maillon de chaîne selon la revendication 11, **caractérisé en ce que** le rayon de l'arc de cercle est au moins aussi grand que le rayon extérieur du rouleau déflecteur (40).

13. Maillon de chaîne selon l'une des revendications 10 à 12, **caractérisé en ce que** la largeur de l'évidement (41) correspond à l'étendue axiale du rouleau déflecteur (40) sur sa périphérie.

14. Maillon de chaîne selon l'une des revendications 1 à 13, **caractérisé en ce que** le plan d'articulation (G) est situé dans le plan médian entre la surface d'appui (17) et une face inférieure (37) du maillon de chaîne (10) opposée à la surface d'appui.

15. Machine de l'industrie du tabac, en particulier un accumulateur pour un produit de tabac en forme de tige, équipée d'une chaîne transporteuse constituée de maillons de chaîne (10) selon l'une des revendications 1 à 14.
